(19) Europäisches Patentamt

European Patent Office

Office européen des brevets

(11) Veröffentlichungsnummer: **0 285 937 B1**

(12) **EUROPÄISCHE PATENTSCHRIFT**

(45) Veröffentlichungstag der Patentschrift: **02.06.93**

(21) Anmeldenummer: **88104895.3**

(22) Anmeldetag: **26.03.88**

Teilanmeldung 91118711.0 eingereicht am 26/03/88.

(51) Int. Cl.5: **C01B 33/107**, B01J 31/02

(54) **Verfahren und Vorrichtung zur Herstellung von Dichlorsilan.**

(30) Priorität: **04.04.87 DE 3711444**

(43) Veröffentlichungstag der Anmeldung:
**12.10.88 Patentblatt 88/41**

(45) Bekanntmachung des Hinweises auf die
Patenterteilung:
**02.06.93 Patentblatt 93/22**

(84) Benannte Vertragsstaaten:
**BE DE FR GB IT NL SE**

(56) Entgegenhaltungen:
**FR-A- 2 118 725**

(73) Patentinhaber: **HÜLS AKTIENGESELLSCHAFT**
**Paul-Baumann-Strasse 1**
**W-4370 Marl 1(DE)**

(72) Erfinder: **Matthes, Reinhard, Dr.**
**Neumatten-Weg 16**
**W-7888 Rheinfelden(DE)**
Erfinder: **Schork, Reinhold, Dr.**
**Fritz-Rösslerstrasse 6**
**W-7888 Rheinfelden(DE)**
Erfinder: **Vahlensieck; Hans-Joachim, Dr.**
**Im Habiken 2**
**W-7867 Wehr(DE)**

**Beschreibung**

Dichlorsilan kann aus FeSi und HCl nur in geringer Ausbeute und durch hohen Destillationsaufwand zur Abtrennung zahlreicher Nebenprodukte hergestellt werden.

Üblich ist daher die Disproportionierung von Trichlorsilan an geeigneten Katalysatoren zu Dichlorsilan unter Abtrennung von Siliciumtetrachlorid. Hierbei handelt es sich um eine Gleichgewichtsreaktion, deren Gleichgewicht sich nur langsam einstellt. Die Mehrzahl der verwendeten Katalysatoren sind sekundäre und tertiäre Amine oder quartäre Ammoniumsalze (vgl. DE-AS 21 62 537). Dabei werden, um die Einstellung des Gleichgewichts zu beschleunigen und nicht zu lange Verweilzeiten am Katalysatorbett und im Reaktor zu erreichen, hohe Temperaturen und hohe Drücke angewendet.

Unter Druck besteht aber ein hohes Risiko, weil Dichlorsilan und ggf. gebildete Anteile von $H_3SiCl$ bzw. $SiH_4$ selbstentzündlich sind und bei Leckage zu außerordentlich heftigen Reaktionen führen. In Durchflußreaktoren ist der Anteil von unumgesetztem Trichlorsilan sehr hoch. Das Trichlorsilan muß mehrfach unter hohem Energieaufwand redestilliert werden, bevor schließlich eine vollständige Umsetzung erreicht ist.

Es bestand daher die Aufgabe, den hohen Aufwand für Energie zu senken und besonders den Aufwand für Destillation von unumgesetztem Trichlorsilan zu vermindern.

Weiterhin bestand die Aufgabe, eine rasche Einstellung des Gleichgewichts der Disproportionierung zu erreichen und gebildetes Dichlorsilan sofort nach der Bildung zu entfernen. Eine weitere Aufgabe bestand darin, den Aufwand für die Vorrichtung zu senken.

Gegenstand der Erfindung ist das Verfahren zur Herstellung von Dichlorsilan durch Disproportionierung von Trichlorsilan an einem Katalysatorfestbett, dadurch gekennzeichnet, daß bei Reaktortemperaturen zwischen 10° C und dem Siedepunkt des Reaktionsgemisches gasförmig Dichlorsilan dem Reaktor entnommen und gewonnen wird, wobei Anteile von Trichlorsilan kondensiert und in den Reaktor zurückgeführt werden und die flüssige Reaktionsphase teilweise dem Reaktor entnommen und in Tetrachlorsilan und in den Reaktor zurückgeführtes Trichlorsilan getrennt wird.

Normaldruck ist bei der Reaktion entschieden bevorzugt. Der Druck kann jedoch auch zwischen 0,8 und 1,2 bar liegen.

Wesentliches Merkmal des Verfahrens ist eine siedende Reaktionslösung und Ableitung von Dichlorsilan als Gas direkt nach seiner Bildung in eine Destillationsanlage, wobei im Gas Trichlorsilan nur in geringen Anteilen enthalten ist, welche der Temperatur bei der Reaktion entsprechen.

Die Temperatur im Reaktor soll den Siedepunkt des Reaktionsgemisches nicht überschreiten, d.h. höchstens 40 bis 50° C erreichen.

Die flüssige Reaktionsphase wird vorzugsweise dem Reaktor nur in dem Maß entnommen, wie das durch Disproportionierung entstehende Tetrachlorsilan abgetrennt werden muß, was durch Destillation und Rückführung des Trichlorsilans und Abtrennung von reinem Tetrachlorsilan aus der Destillationsblase der Kolonne geschieht. Sehr bevorzugt wird nur die Menge frisches Trichlorsilan zugeführt, die verbraucht wird. In der sehr bevorzugten Ausführungsform des Verfahrens und in sehr bevorzugter Ausbildung der Vorrichtung gibt es nur eine Destillationskolonne, in der am Kolonnenkopf reines Dichlorsilan entnommen wird, aus deren Sumpf Tetrachlorsilan entnommen wird und in der kondensiertes Trichlorsilan in mittlerer Höhe über eine Abtauchung entnehmbar und in den unteren Teil des Reaktors zurückgeführt wird. In dieser Kolonne befinden sich in geeignetem Abstand zueinander in mittlerer Höhe übereinander die Zuführung von flüssigem Reaktorinhalt aus Trichlorsilan und Tetrachlorsilan, die Abführung von kondensiertem Trichlorsilan und die Zuführung der Gase aus Dichlorsilan und Anteilen von Trichlorsilan.

Vorzugsweise ist der Reaktor mit einem Überlauf für die Reaktorflüssigkeit versehen, wodurch im oberen Teil des Reaktors ein nicht beheizter Gasraum besteht, in dem bereits ein Teil des Trichlorsilans kondensiert.

Die Heizung des Reaktors kann durch einen Heizmantel erfolgen. Der Reaktor ist oberhalb einer Siebplatte bis zum Flüssigkeitsspiegel mit Formkörpern, vorzugsweise Kugeln, des Festbettkatalysators gefüllt.

Das Trägermaterial des Katalysators kann an sich beliebig sein, besteht jedoch vorzugsweise aus $SiO_2$, welches aus gefälltem $SiO_2$ durch Formgebung und Trocknung hergestellt wurde. Vorzugsweise hat der Katalysatorträger eine Oberfläche von 150 bis 250 $m^2/cm^3$. Auf dem Katalysatorträger wird vorzugsweise ein Alkylamino-trialkoxysilan durch Kondensation in Gegenwart von Wasser chemisch gebunden, worauf der hergestellte Katalysator sorgfältig getrocknet wird. Bevorzugt sind Alkylamino-trialkoxysilane mit 1 bis 20 C-Atomen in der Alkylaminogruppe und 1 bis 4 C-Atomen, die von Sauerstoff unterbrochen sein können, in der Alkoxygruppe. In der Alkylaminogruppe sind tertiäre Amine mit 1 bis 3 C-Atomen in der Alkylengruppe und 1 bis 10 C-Atomen in der Alkylgruppe bevorzugt.

Diese Katalysatoren bewirken eine sehr starke Beschleunigung der Disproportionierung, besonders auch bei niedrigen Temperaturen.

2

Aus der gesamten Apparatur sind Spuren von Feuchtigkeit vor der Reaktion sorgfältig zu entfernen und während der Reaktion der Zutritt von Feuchtigkeit durch Verwendung von z.B. Stickstoff als Schutzgas zu vermeiden.

Das Verfahren wird vorzugsweise mit einer Vorrichtung ausgeführt, in welcher die Destillationskolonne mit Abnahme von Dichlorsilan am Kolonnenkopf und Kondensation von Trichlorsilan mit der Destillationskolonne zur Destillation von Trichlorsilan und Abführung von Tetrachlorsilan aus der Destillationsblase zu einer einzigen Destillationskolonne übereinanderstehend vereint sind, welche mit der Zuführung für Gase oberhalb der Abnahme von Trichlorsilan und der Zuführung von flüssigem Reaktorinhalt unterhalb der Abnahme von Trichlorsilan mit dem Reaktor verbunden und zu einer Einheit integriert ist. Weiterer Gegenstand der Erfindung ist daher die bevorzugte Vorrichtung zur bevorzugten Durchführung des Verfahrens, bestehend aus einem Festbettreaktor und einer mit diesem verbundenen danebenstehenden Destillationskolonne, derart, daß die Zuführung von Gasen aus dem Reaktor in die Destillationskolonne über der Abführung von Trichlorsilan, welches in den Reaktor zurückgeführt wird, und diese über der Zuführung von aus dem Reaktor kommender Reaktorflüssigkeit in die Destillationskolonne angeordnet ist und Dichlorsilan mit einem Kondensator am Kolonnenkopf und Tetrachlorsilan aus dem Sumpf der Destillationsblase entnommen wird.

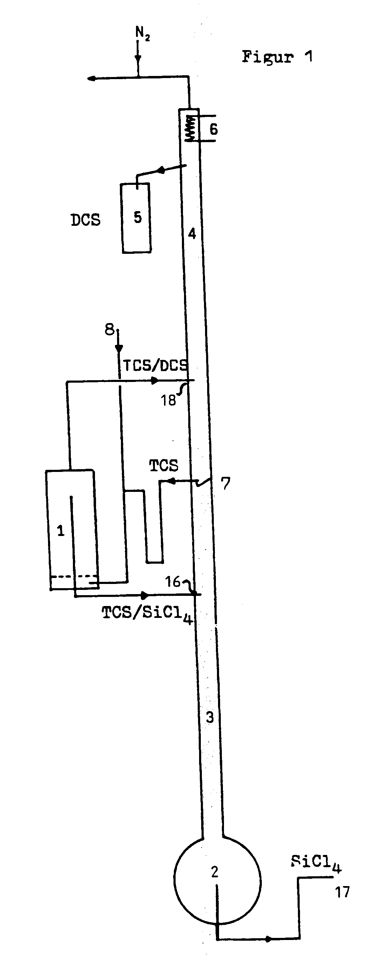

In der Zeichnung der Figur 1 ist die vorzugsweise für die Durchführung des Verfahrens benutzte Vorrichtung dargestellt. Die Zeichnung zeigt nebeneinanderstehend der Reaktor 1 mit Festbett und Überlauf für den flüssigen Reaktorinhalt, Zuführung für frisches und destilliertes Trichlorsilan in den Reaktor sowie Abführung für gasförmige Reaktionsprodukte in Zuordnung zu der nebenstehenden Destillationskolonne (3 + 4) mit Kondensator 6 und Produktvorlage 5 für Dichlorsilan (DCS), Verstärkerteil 4 für die Destillation des Dichlorsilans und Kondensation des Trichlorsilans, Abtriebsteil 3 zur Destillation von Trichlorsilan und Destillationsblase 2 zur Sammlung und Abführung von reinem Tetrachlorsilan durch den Überlauf 17, wobei die Zuführung 18 von Gase (DCS mit Anteilen von Trichlorsilan) aus dem Reaktor, die Abführung von flüssigem Trichlorsilan durch die Abtauchung 7 und die Zuführung 16 von flüssigem Trichlorsilan mit Anteilen von Tetrachlorsilan (TSC/SiCl$_4$) im mittleren Teil der Destillationskolonne untereinander angeordnet sind. Der Inhalt der Destillationsblase wird vorzugsweise auf Siedetemperatur (56° C) gehalten.

Durch Temperaturkontrolle wird der Destillationsverlauf verfolgt. Störungsfreier kontinuierlicher Betrieb stellt sich ein, wenn direkt oberhalb des Einlaufs der flüssigen Reaktionsmischung aus dem Reaktor die Kolonnentemperatur 32° C nicht oder nur geringfügig übersteigt. Vorzugsweise ist die Destillationskolonne mit Füllkörpern gefüllt. Frisches Trichlorsilan wird über die Leitung 8 zugegeben und tritt bei 12 zusammen mit rückgeführtem TCS in den Reaktor ein.

Der Reaktor ist oberhalb der Siebplatte 9 mit dem Katalysator-Füllkörper 10 bis zur Höhe des Überlaufs 11 gefüllt.

Die Kolonne ist mit Füllkörpern 15 gefüllt.

Als Katalysatoren können beliebige für die Disproportionierung von TCS bekannte Katalysatoren, z.B. SiO$_2$, Alkoxysilane o. dgl. verwendet werden, jedoch haben diese geringere Wirkung als der Katalysator der allgemeinen Formel

$(C_xH_{2x+1}O)_3$ $Si(CH_2)_zN(C_yH_{2y+1})_2$

mit x = 1 bis 4; y = 1 bis 10; z = 1 bis 3.

Dieser Katalysator sowie dessen Verwendung ist nicht Gegenstand der vorliegenden Erfindung und kann für beliebige Verfahren der Disproportionierung von TCS in flüssiger oder gasförmiger Phase und unabhängig von der Art der Vorrichtung verwendet werden.

Beispiel 1

Als Katalysator wurde ein Alkylamin-trialkoxysilan der allgemeinen Formel

$(CH_3CH_2O)_3$ $Si$ $(CH_2)_3$ $N$ $(Octyl)_2$

eingesetzt, welches in Gegewart von wasserhaltigem Ethanol auf kugelförmigem SiO$_2$-Trägermaterial fixiert und im Vakuum getrocknet wird.

6,2 g Aminosilan/100 g Katalysatormasse wurden so immobilisiert.

Unter Stickstoffatmosphäre wurde die Katalysatormasse in den Reaktor eingebracht, ebenso die Destillationskolonne mit N$_2$ gespült. Dann wurde SiCl$_4$ in die Destillationsblase eingefüllt und bis zum Sieden erhitzt. Nachdem am Kolonnenkopf Rückfluß einsetzte, wurde der Reaktor langsam mit Trichlorsilan beaufschlagt, wobei die Disproportionierungsreaktion einsetzte, der Reaktor wurde so beheizt, daß die Reaktorfüllung siedete. Durch das entstehende gasförmige Dichlorsilan und das in flüssiger Phase in die Kolonne fließende Trichlorsilan begann auch die Destillationskolonne zu arbeiten, die Temperaturen am Kolonnenkopf und in der Kolonnenmitte fielen, wobei die automatische Kolonnenkopfsteuerung dafür sorgte, daß nur reines Dichlorsilan in die Vorlage gelangte.

Gleichzeitig entstandenes $SiCl_4$ wurde durch einen kontinuierlichen Überlauf am Sumpf abgezogen. Auf diese Weise wurden pro Stunde und 100 g Katalysatormasse aus 32,3 g (+ 0,24 Mol) TCS 21,6 g (= 0,13 Mol) $SiCl_4$ und 11,2 g (= 0,11 Mol) DCS erhalten (GC-Reinheit: 97,5 %, DCS, 1,7 % $H_3SiCl$, 0,8 % TCS).

Dieses Ergebnis ist dem Resultat bei einfachem Reaktordurchlauf mit nachfolgender Redestillation gegenüberzustellen:

Die gleiche Menge DCS je 100 g gleichartiger Katalysatormasse wurde erhalten, wenn 128 g (0,95 Mol) TCS das entsprechende Reaktorvolumen durchflossen.

Dies entspricht der vierfachen Menge TCS, wovon 3/4 ungenutzt redestilliert werden mußte.

Beispiel 2

Im folgenden Beispiel wurde Katalysatormasse eingesetzt, die durch Hydrolyse von Alkylamino-trialkoxysilan der Formel

$(CH_3O)_3 Si (CH_2)_3 N (C_2H_5)_2$

in Gegenwart von Wasser unter Abspaltung von Methanol mit nachfolgender sorgfältiger Trocknung im Vakuum erhalten wurde. Die Verfahrensweise von Beispiel 1 wird wiederholt.

Die Versuche an diesem Katalysator wurde in der beschriebenen Apparatur bei verschiedenen Reaktorheiztemperaturen durchgeführt.

Die Ergebnisse sind tabellarisch dargestellt (alle Angaben sind bezogen auf 100 g Katalysatormasse):

| Heiztemperatur °C | Einsatz TCS g / h | erhaltenes DCS g / h | $SiCl_4$ g / h |
|---|---|---|---|
| 25 | 42,0 | 14,2 | 25,5 |
| 35 | 76,7 | 26,1 | 49,1 |
| 45 | 100,9 | 34,9 | 60,1 |
| 50 | 101,8 | 35,7 | 61,6 |

In entsprechender Weise kann als Katalysator auch $(CH_3O)_3 Si (CH_2)_2 N (C_4H_9)_2$ auf Träger aus $SiO_2$ oder Keramik fixiert verwendet werden.

**Patentansprüche**

1. Verfahren zur Herstellung von Dichlorsilan durch Disproportionierung von Trichlorsilanen an einem Katalysatorfestbett, **dadurch gekennzeichnet,** daß bei Drücken zwischen 0.8 und 1.2 bar und Reaktortemperaturen zwischen 10° C und dem Siedepunkt des entstehenden Reaktionsgemisches gasförmig Dichlorsilan entnommen und gewonnen wird, wobei Anteile von Trichlorsilan kondensiert und in den Reaktor zurückgeführt werden und die flüssige Reaktionsphase teilweise dem Reaktor entnommen und in Tetrachlorsilan und in den Reaktor zurückzuführendes Trichlorsilan getrennt wird.

2. Verfahren nach Anspruch 1, **dadurch gekennzeichnet,** daß nur die durch Disproportionierung verbrauchte Menge Trichlorsilan als frischer Ausgangsstoff dem Reaktor zugeführt wird.

3. Verfahren nach einem der Ansprüche 1 bis 2, **dadurch gekennzeichnet,** daß aus dem entnommenen Gas Trichlorsilan teilweise im oberen Teil des Reaktors zurückfließt und der verbleibende Teil Trichlorsilan in einer Destillationskolonne kondensiert wird, wobei im Kopf der Destillationskolonne reines Dichlorsilan gewonnen wird.

EP 0 285 937 B1

4. Verfahren nach einem der vorangehenden Ansprüche, **dadurch gekennzeichnet,** daß der dem Reaktor entnommene Anteil der flüssigen Phase in einer Destillationskolonne getrennt und Trichlorsilan nach Kondensation in den Reaktor zurückgeführt wird, wobei reines Tetrachlorsilan in der Destillationsblase gesammelt und entnommen wird.

5. Verfahren nach einem der vorangehenden Ansprüche, **dadurch gekennzeichnet,** daß die Destillationskolonnen nach den Ansprüchen 3 und 4 durchgehend angeordnet sind, derart, daß übereinander in dieser Reihenfolge die Einführung der flüssigen Reaktionsmischung, die Abführung von kondensiertem und zurückgeführtem Trichlorsilan und die Zuführung der entnommenen Gase erfolgt.

6. Vorrichtung zur bevorzugten Durchführung des Verfahrens nach einem der vorangehenden Ansprüche, bestehend aus einem Festbettreaktor (1) und einer mit diesem verbundenen, danebenstehenden Destillationskolonne (3 + 4), welche eine Zuführung (18) von Gasen aus dem Reaktor in die Destillationskolonne aufweist, welche über der Abführung (7) von Trichlorsilan in den Reaktor angeordnet ist und eine Zuführung (16) von Reaktorflüssigkeit in die Destillationskolonnne, welche unter der Abführung (7) von Trichlorsilan angeordnet ist, und welche am Kolonnenkopf einen Kondensator (6) und eine Produktvorlage (5) für Dichlorsilan sowie eine Destillationsblase (2) mit Abführung (17) für Tetrachlorsilan aufweist.

7. Vorrichtung nach Anspruch 6, dadurch gekennzeichnet, daß zur Entnahme der Reaktorflüssigkeit aus dem Reaktor eine den Füllstand festlegender Überlauf vorgesehen ist.

8. Vorrichtung nach einem der Ansprüche 6 oder 7, **dadurch gekennzeichnet,** daß die Zuleitung (18) von Gasen in die Destillationskolonne ein Gefälle zur Destillationskolonne aufweist.

9. Vorrichtung nach einem der Ansprüche 6 bis 8, **dadurch gekennzeichnet,** daß die Zuführung von flüssigem Trichlorsilan aus der Destillationskolonne im unteren Bereich des Reaktors, vorzugsweise gemeinsam mit der Zuführung von frischem Trichlorsilan, angeordnet, ist.

## Claims

1. Process for the preparation of dichlorosilane by disproportionation of trichlorosilanes on a fixed bed catalyst, characterised in that dichlorosilane in the gaseous state is removed and recovered at pressures between 0.5 and 1.2 bar and at reactor temperatures between $10 °C$ and the boiling point of the reaction mixture being obtained, with amounts of trichlorosilane being condensed and recycled into to the reactor and the liquid reaction phase being partially removed from the reactor and separated into tetrachlorosilane and into trichlorosilane which is recycled to the reactor.

2. Process according to Claim 1, characterised in that only the amount of trichlorosilane consumed by disproportionation is supplied as fresh starting material to the reactor.

3. Process according to one of Claims 1 to 2, characterised in that trichlorosilane from the gas taken off flows back partially in the upper part of the reactor and the remaining part of the trichlorosilane is condensed in a distillation column, with pure dichlorosilane being recovered in the head of the distillation column.

4. Process according to one of the foregoing claims, characterised in that the quantity of liquid phase withdrawn from the reactor is separated in a distillation column and trichlorosilane is recycled to the reactor after condensation, with pure tetrachlorosilane being collected in the distillation vessel and removed.

5. Process according to one of the foregoing claims, characterised in that the distillation columns according to Claims 3 and 4 are arranged continuously so that the introduction of liquid reaction mixture, the discharge of condensed and recycled trichlorosilane and the supply of the removed gases take place above one another in this order.

6. Arrangement for the preferred carrying out of the process according to one of the foregoing claims, consisting of a solid bed reactor (1) and a distillation column (3 + 4) standing thereadjacent and

5

EP 0 285 937 B1

connected with this, which arrangement has a supply line (18) for gases from the reactor into the distillation column, which supply line is arranged above the discharge line (7) for trichlorosilane to the reactor and a supply line (16) for the reactor liquid into the distillation column which is arranged below the discharge line (7) for trichlorosilane, and which arrangement has at the column head a condenser (6) and a product receiver (5) for dichlorosilane as well as a distillation vessel (2) with discharge line (17) for tetrachlorosilane.

7. Arrangement according to Claim 6, characterised in that an overflow located at the filling level is provided for the withdrawal of reactor liquid from the reactor.

8. Arrangement according to one of Claims 6 or 7, characterised in that the supply duct (18) for gases into the distillation column is at a lower level with respect to the distillation column.

9. Arrangement according to one of Claims 6 to 8, characterised in that the supply duct for liquid trichlorosilane from the distillation column is in the lower region of the reactor, preferably arranged together with the supply duct for fresh trichlorosilane.

**Revendications**

1. Procédé de préparation de dichlorosilane par dismutation de trichlorosilane sur un lit de catalyseur fixe, caractérisé en ce que du dichlorosilane est soutiré et obtenu à l'état gazeux sous des pressions entre 0,8 et 1,2 bar et à des températures du réacteur entre 10°C et le point d'ébullition du mélange réactionnel formé, moyennant quoi des fractions de trichlorosilane sont condensées et renvoyées dans le réacteur et la phase réactionnelle liquide est en partie soutirée du réacteur et séparée en tétrachlorosilane et en trichlorosilane renvoyé dans le réacteur.

2. Procédé selon la revendication 1, caractérisé en ce que seule la quantité de trichlorosilane consommée par la dismutation est envoyée dans le réacteur en tant que substance de départ fraîche.

3. Procédé selon l'une des revendications 1 à 2, caractérisé en ce qu'à partir du gaz soutiré, le trichlorosilane reflue en partie à la partie supérieure du réacteur et que la partie restante du trichlorosilane est condensée dans une colonne de distillation, moyennant quoi du dichlorosilane pur est recueilli en tête de la colonne de distillation.

4. Procédé selon l'une des revendications précédentes, caractérisé en ce que la fraction de la phase liquide soutirée du réacteur est séparée dans une colonne de distillation et que le trichlorosilane est ramené dans le réacteur après condensation, moyennant quoi le tétrachlorosilane pur est collecté dans le ballon de distillation et soutiré.

5. Procédé selon l'une des revendications précédentes, caractérisé en ce que les colonnes de distillation selon les revendications 3 et 4 sont directement agencées de telle façon que l'introduction du mélange réactionnel liquide, l'évacuation du trichlorosilane condensé et recyclé et l'alimentation en les gaz soutirés s'opèrent, en superposition, dans cet ordre.

6. Dispositif pour la réalisation préférée du procédé selon l'une des revendications précédentes, consistant en un réacteur à lit fixe (1) et en une colonne de distillation (3 + 4) placée à côté et communiquant avec celui-ci, lequel comporte une alimentation (18) en gaz issus du réacteur en direction de la colonne de distillation qui est placée audessus de l'évacuation (7) du trichlorosilane dans le réacteur et une arrivée (16) de liquide de réacteur dans la colonne de distillation qui est placée audessous de l'évacuation (7) de trichlorosilane et qui comporte en tête de colonne un condenseur (6) et un collecteur de produit (5) pour le dichlorosilane ainsi qu'un ballon de distillation (2) avec une sortie (17) pour le tétrachlorosilane.

7. Dispositif selon la revendication 6, caractérisé en ce que pour le soutirage du liquide de réacteur à partir du réacteur, il est prévu un trop-plein fixant le niveau de remplissage.

8. Dispositif selon l'une des revendications 6 ou 7, caractérisé en ce que l'arrivée (18) de gaz dans la colonne de distillation présente une pente par rapport à la colonne de distillation.

6

**9.** Dispositif selon l'une des revendications 6 à 8, caractérisé en ce que l'admission de trichlorosilane liquide issu de la colonne de distillation est placée à la partie inférieure du réacteur, de préférence conjointement avec l'alimentation en trichlorosilane frais.

Figur 1